Europäisches Patentamt

European Patent Office

Office européen des brevets

(19)

(11) **EP 1 050 826 A1**

(12) **EUROPEAN PATENT APPLICATION**

(43) Date of publication:
**08.11.2000 Bulletin 2000/45**

(51) Int Cl.⁷: **G06F 13/42**

(21) Application number: **99108872.5**

(22) Date of filing: **05.05.1999**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(71) Applicant: **MOTOROLA, INC.**<br>**Schaumburg, IL 60196 (US)** | (72) Inventor: **von der Wense, Hans-Christian**<br>**85293 Reichertshausen (DE)**<br><br>(74) Representative: **Richardt, Markus Albert**<br>**Motorola GmbH,**<br>**Intellectual Property Dept.,**<br>**Hagenauerstrasse 47**<br>**65203 Wiesbaden (DE)** |

(54) **Method for operating a communication system on a serial bus**

(57)    A sub-bus system comprises a single master unit (110), and a plurality of slave units (120) coupled by a one-wire bus (105). The master unit (110) controls the communication process without the need for arbitration by broadcasting unique identifiers (130). Each slave unit (120) has a table containing identifications for messages to which that particular slave is to respond either as sender or as receiver. In the unique identifier, the master unit (110) transmits an information (137) about the number of data blocks to be transferred via the bus in the following.

## FIG. 3

210 — BROADCASTING

230 — DATA TRANSFER?

240 — SEND OR RECEIVE?

250 — N?

220

260 — TRANSFERRING DB

EP 1 050 826 A1

**Description**

Field of the Invention

The present invention generally relates to communication systems having distributed units coupled by a common bus and relates to the operation of such systems, and, more particularly, relates to a system with single master and multiple slaves.

Background of the Invention

Modern cars comprise tens or hundreds of microcontrollers used for a variety of functions. To name only a few, mircrocontrollers control the motor and the anti-lock brake system (ABS), instruct window lifters, report the status of door locks, and help to adjust passenger seats or back mirrors. Microcontrollers are often combined with a mechanical element (e.g., actuator, sensor, input device). The art of providing such devices is known as "mechatronics". Thereby, every mechanical element obtains its own intelligence. This approach provides local data processing and saves control wires which carry high currents. Connecting mechatronical devices by networks leads to an increasing number of nodes and busses.

The networks are typically implemented by multiplexed serial busses which distribute data blocks of predefined lengths to different nodes. Preferably, in a hierarchical bus system, a global bus system - such as, for example, a system operating according to the well-known CAN protocol - provides the communication back bone. The global bus is typically a two wire system with a relatively large channel capacity and high fault tolerance. However, for certain "local" applications (window lifter receiving commands from a keyboard), the use of the global bus system would not be appropriate. Simpler communication systems for the local application busses are more attractive and help to save costs (e.g., for wires, controllers). Local busses are already used, for example, to transfer data between a CAN node at the global bus and certain microcontrollers which do not need to be connected to the global bus.

The local systems should operate according to a standardized low-cost protocol so that devices from different manufacturers become compatible.

The following reference is useful: "Hans-Christian von der Wense, Will Specks, Andreas Krüger: 'Anforderungen und Implementierung von Sub-Bussen in Hierachischen Automobilnetzwerken', proceedings to 'Embedded Intelligence '99', Nürnberg, Germany, 2. to 4. March 1999, pages 158-165, published by WEKA Fachzeitschriften-Verlag GmbH, Gruber Str. 46a, D-85586 Poing."

The present invention seeks to provide an improved method for operating a communication system which mitigate or avoids disadvantages and limitations of the prior art.

Brief Description of the Drawings

FIG. 1     illustrates a simplified block diagram of a communication system using the method of the present invention;

FIG. 2     illustrates a simplified block diagram of an identifier block (IB) used in the system of FIG. 1 in a preferred embodiment of the invention; and

FIG. 3     illustrates a simplified method flow chart for a method of the present invention.

Detailed Description of a Preferred Embodiment

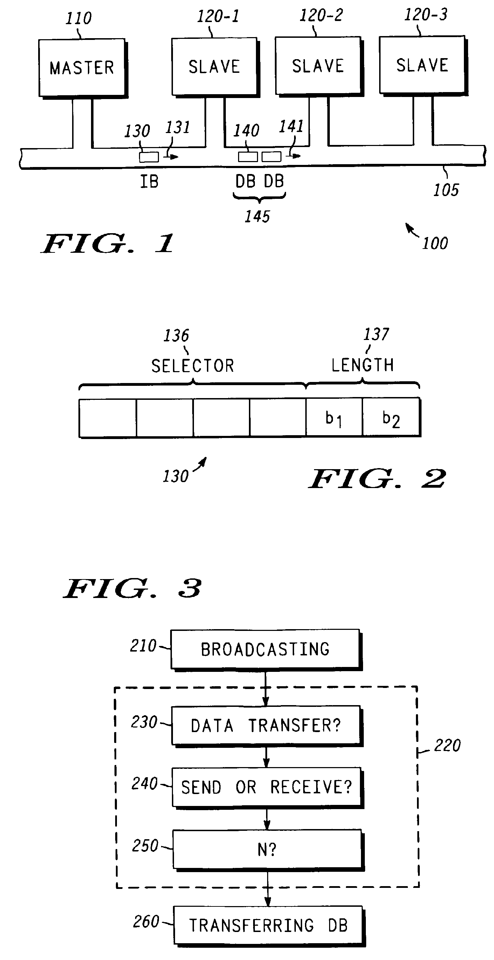

FIG. 1 illustrates a simplified block diagram of communication system 100 using the method of the present invention. System 100 is intended to be a non-limiting example for convenience of explanation. Persons of skill in the art can implement the present invention also by other means, without the need of explanation herein. System 100 comprises single master unit 110, a plurality of S slave units 120-s (index s=1 to S) coupled by common serial bus 105. Bus 105 is, preferably, a serial bus with a single wire. The present invention is conveniently explained for S = 3 with first slave unit 120-1, second slave unit 120-2, and third slave unit 120-3. Reference number 120 without index s stands for one or more slave units.

Identifier block 130 (hereinafter "IB", details in FIG. 2) and data block 140 (hereinafter "DB") within bus 105 symbolize data transfer (sending and receiving). Master unit 110 sends IBs to the complete set of slave units 120-1 to 120-S. In the example, master unit 110 sends IB to slave units 120-1, 120-2 and 120-3 (arrow 131).

The following cases are distinguished, for example, for unit 120-1:

(i) slave unit 120-1 sends plurality 145 of N DBs to slave unit 120-2 (arrow 141), while the other slave units 120-2 to 120-3 do not send;

(ii) slave unit 120-1 receives plurality 145 of N DBs from slave unit 120-2 (arrow 142); or

(iii) slave unit 120-1 does not send or receive DBs.

The other slave units can operate accordingly.

A slave unit which either sends or receives DBs is considered as "activated" (e.g., units 120-1 and 120-2 in cases (i) and (ii)). A slave unit which does neither send nor receive DBs is considered as "deactivated" or "passive" (e.g., unit 120-1 in case (iii)).

It is intended to activate only a first subset of the plurality of slave units 120 and to deactivate a second subset of slave units 120 at one time. The term "deactivate" is intended to include that a unit which has been deactivated earlier, remains in this state.

Preferably, the first and second subsets are complementary.

By receiving IB, each slave unit 120-s independently distinguishes whether to become active or passive. Also, by receiving IB, an activated slave unit 120 determines whether to send or to transmit DBs.

The number N of DBs ($N \geq 0$) which are to be sent or to be received by an activated slave unit 120 can vary. According to the present invention, the number N of DBs to be transmitted is encoded within the IB. This in an advantage of the present invention. In a communication system of the present invention, there is no need to indicate the end of data information in the last transmitted DB or in an additional block transmitted thereafter.

Having described the present invention for the master and the slaves as different units, is convenient for explanation, but not essential for the present invention. It is also possible that master unit 110 operates as a slave.

FIG. 2 illustrates a simplified block diagram of identifier block 130 (IB) used in system 100 of FIG. 1 in a preferred embodiment of the invention. Illustrated in the order by which master unit 110 transmits, IB comprises bit field 136 with M selector bits and length bit field 137 with L lengths bits $\{ b_1 ... b_L \}$. Other orders can also be used.

Slave unit 120 receiving IB independently distinguishes from selector bits 136 whether to become active or passive, and - if active - what action has to be taken next. Preferably, slave unit 120 uses a look-up table for selector bits 136.

Preferably, the number of selector bits is M = 4, and the number of lengths bit is L = 2. It is possible to define $K = 2^L$ classes of different bit fields 136, wherein each class uses an equal number N of DBs.

For example, first and second lengths bits $\{ b_1 b_2 \}$ encode the number $N_k$ of DBs as follows:

$$
\begin{array}{llr}
\{ \ 0 \ \ 0 \ \} & N_1 \ = \ 1 & \qquad (1)\\
\{ \ 0 \ \ 1 \ \} & N_2 \ = \ 2 & \\
\{ \ 1 \ \ 0 \ \} & N_3 \ = \ 4 & \\
\{ \ 1 \ \ 1 \ \} & N_4 \ = \ 8 &
\end{array}
$$

Index k is a counter for classes (k = 1 to K) of instructions identified by bit fields 136. There can be up to $K = 2^L$ classes.

It is an advantage that the number K of allowed values for $N_k$ is limited. In other words, the number of DBs (i.e. N) is not directly written in IB, but coded with length bit field 137 e.g., $\{ b_1 b_2 \}$. Values for $N_k$ are, preferably, defined by powers to 2 like 1,2,4,8 or 2,4,8,16, etc. It is convenient to set $N_k = L^{(k-1)}$. M and L can be changed dynamically during operation of system 100, for example, following a broadcast from master unit 110 to all slave units 120.

The present invention is now explained by example: System 100 is a bus-subsystem in a car (not illustrated) with master unit 110 being a node for coupling system 100 to a global bus (e.g., CAN-bus, not illustrated), slave unit 120-1 being the controller of a mechatronic window lifter, and slave unit 120-2 being a keyboard receiving instructions from a passenger (e.g., to move to window up or down). System 100 is physically located in the door of the particular window. System 100 communicates with other bus-subsystems (e.g., a similar system in the other doors) through the global bus. This is convenient when, for example, the car driver wants to open or close the passenger window. Thereby, master unit 110 would serve as communication gateway between slaves 120 on bus 105 and the global bus by fetching data from the global bus and forwarding the data to local bus 105.

Coupled to system 100 there can be further slave units 120-3 having functions which are not related to the window lifter (e.g., a thermometer). Master unit 110 periodically activates the keyboard which eventually causes the window lifter to operate. In that case, master unit 110 broadcasts an IB which (a) activates slave unit 120-2 (keyboard), (b) instructs slave unit 120-2 to send, and (c) tells slave unit 120-2 to send N = 2 DBs. The same IB also (a) activates slave unit 120-1 (window lifter), (b) causes slave unit 120-1 to go into a receiving mode, and (c) tells slave unit 120-1 that N = 2 DB will follow. It is an advantage of the present invention that actions (a)(b)(c) are performed, preferably, simultaneously. The same IB is ignored by slave unit 120-3.

Then, slave unit 120-2 writes N = 2 DBs to bus 105 with instructions to slave 120-1 (e.g., move up, move down, or do nothing). Slave unit 120-3 knows that N = 2 DBs can be disregarded. This is very convenient.

The present invention has a series of advantages over the prior art. For example, bus arbitration is not required because only master unit 110 sending unique identifiers (i.e. IB) selectively activates or deactivates the slave units.

In other words, the present invention also relates to communication system 100 having single master unit 110 and a plurality of slave units 120 coupled to serial bus 105. System 100 is characterized in that master unit 110 broadcasts an identifier block 130 (IB) to substantially all slave units 120; and a first slave unit, based on the information in IB, determines whether to perform data transfer or not (active or passive), determines the transfer mode (i.e., receive or send), and determines a number of data blocks (N), and transfers the number of data blocks to a second slave unit. Preferably, the second slave unit also determines whether to perform data transfer or not, the transfer mode, and the number of data blocks (N). From the same IB, first and second slave units determine the transfer mode differently (e. g., first unit sending, second unit receiving). Preferably, the number N of data blocks is selected from a set of predefined numbers, e.g., $N_1$ to $N_K$.

FIG. 3 illustrates a simplified flow chart diagram for method 200 of the present invention. Method 200 to operate serial bus communication system 100 with single master unit 110 and multiple slave units 120 comprises the following steps:

- broadcasting 210 by master unit 110 an identifier block 130 (IB) to substantially all slave units 120;
- in each slave unit independently (see dashed frame 220), based on the information in IB, determining 230 whether to perform data transfer or not (i.e., unit activated, deactivated), determining 240 the transfer mode (i.e., send or receive), and 250 determining the number N of data blocks; and
- depending on the results in the previous steps (a)(b)(c), transferring 260 ("transmitting", preferably, at equal transfer time) the number N of DBs from first slave unit 120-1 to second slave unit 120-2.

In other words, the present invention provides a method for operating a communication system 100 with serial bus 105 connecting first unit 110 (e.g., master) and second unit 120 (e.g., slave). The method has the steps of broadcasting 210 by unit 110 an identifier block 130(IB) to bus 105 to selectively activate second unit 120, and transmitting 260 by unit 120 a plurality of data blocks (DBs) each having a predetermined length via bus 105. The method is characterized in that in broadcasting step 210, first unit 110 includes bit field 137 $\{b_1 ... b_2\}$ (e.g., at predetermined position, see FIG. 2) into IB to indicate the number N of data blocks DB (preferably, powers to 2) in transmitting step 260.

Further, the present invention relates to a computer program system to be executed in serial communication system 100 with single master processor 110 executing a master task, first slave processor 120-1 and second slave processor 120-2, each executing independend slave tasks, wherein the processors are coupled together via serial bus 105. The computer program causes processor 110 to provide (cf. step 210, master task) an identifier block IB to processors 120-1 and 120-2, the IB instructing said first and second processors independently (each slave processor responding in differently to the same IB) (a) to be activated or deactivated, (b) to send or to receive data blocks, and (c) on a number of data blocks N out of a set of predefined numbers (e.g., $N_1$ to $N_K$) (see steps 230, 240, 250, slave task). The computer program further causes processor 120-1 to send (cf. step 260) the number of data blocks to processor 120-2.

While the invention has been described in terms of particular structures, devices and methods, those of skill in the art will understand based on the description herein that it is not limited merely to such examples and that the full scope of the invention is properly determined by the claims that follow.

## Claims

1. Method for operating a communication system (100) with a serial bus (105) connecting a first unit (110) and a second unit (120), said method having the steps of broadcasting (210) by said first unit an identifier block (130) to the bus to selectively activate said second unit, and transmitting by said second unit a plurality of data blocks each having a predetermined length via said bus, said method characterized in that in said broadcasting step, said first unit includes a length bit field into said identifier block to indicate the number N of data blocks in the following transmitting step.

2. The method of claim 1, wherein said first unit operates as a master and said second unit operates as a slave.

3. The method of claim 2, wherein said second unit transmits said number of data blocks to a third unit.

**4.** The method of claim 3, wherein said third unit is a slave.

**5.** The method of claim 1, wherein said first unit sends said identifier block (130) also to deactivate said second unit.

**6.** The method of claim 1, wherein said bit field is located at a predefined position in said identifier block.

**7.** The method of claim 1 wherein the number N of data block is selected from powers to 2.

**8.** The method of claim 7 wherein the number N of data blocks is selected from the set of values 1, 2, ... $2^{(L-1)}$ with L being the number of bits in said bit field.

**9.** The method of claim 8 wherein L can be changed dynamically during the operation of said system by broadcasting an predetermined identified from said first unit to second unit.

**10.** The method of claim 1 wherein in repetitions of said broadcasting step, said first block broadcasts identifier blocks having equal length.

**11.** A method to operate a serial bus communication system (100) with a single master unit (110) and multiple slave units (120), said method comprising the steps of:

• broadcasting by said master unit an identifier block (IB, 130) to substantially all slave units;
• in each slave unit independently, based on the information in said identifier block, (a) determining whether to perform data transfer or not, (b) determining the transfer mode, and (c) determining a number of data blocks; and
• depending on the results in the previous steps (a)(b)(c), transferring said number of data blocks from a first slave unit to a second slave unit.

**12.** The method of claim 11, wherein in said transferring step, each data block is transferred with an equal transfer time.

**13.** The method of claim 11, wherein the transfer mode can be determined either as receiving mode or as sending mode.

**14.** A communication system (100) having a single master unit (110) and a plurality of slave units (120) coupled to a serial bus (105), characterized in that

said master unit broadcasts an identifier block (IB, 130) to substantially all slave units (120); and
a first slave unit, based on the information in said identifier block, determines whether to perform data transfer or not, determines the transfer mode, and determines a number of data blocks, and transfers said number of data blocks to a second slave unit.

**15.** The communication system of claim 14, wherein said second slave unit also determines whether to perform data transfer or not, the transfer mode, and the number of data blocks, and wherein said first and second slave units determine the transfer mode differently.

**16.** The communication system of claim 14, wherein said number of data blocks is selected from a set of predefined numbers.

**17.** A computer program system to be executed in a serial communication system with a single master processor executing a master task, a first slave processor and a second slave processor each executing independend slave tasks, said processors coupled together via a serial bus, said computer program comprising the steps of:

by said master processor, providing an identifier block to said first and second slave processors, said identifier block instructing said first and second processors independently (a) to be activated or deactivated, (b) to send or to receive data blocks, and (c) on a number of data blocks out of a set of predefined numbers; and
by said first slave processor, sending said number of data blocks to said second processor.

**_FIG. 1_**

**_FIG. 2_**

**_FIG. 3_**

European Patent Office

## EUROPEAN SEARCH REPORT

Application Number

EP 99 10 8872

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br><br>A | US 5 600 803 A (IITSUKA HIROYUKI ET AL) 4 February 1997 (1997-02-04) * column 2, line 66 - column 4, line 15 * * column 6, line 25 - column 7, line 6 * * column 8, line 53 - column 11, line 25 * * abstract; claims 1-3; figures 4-6 * | 1-3, 11-17<br><br>4-10 | G06F13/42 |
| X<br><br>A | US 5 835 785 A (OVERTOOM ERIC J ET AL) 10 November 1998 (1998-11-10) * column 1, line 64 - column 2, line 47 * * column 12, line 33 - line 50 * * abstract; claims 1-3; figures 6,12 * | 1-3, 11-17<br><br>4-10 | |
| | | | TECHNICAL FIELDS SEARCHED (Int.Cl.7)<br><br>G06F |

The present search report has been drawn up for all claims

| Place of search | Date of completion of the search | Examiner |
|---|---|---|
| THE HAGUE | 20 October 1999 | Nguyen Xuan Hiep, C |

EPO FORM 1503 03.82 (P04C01)

EP 1 050 826 A1

**ANNEX TO THE EUROPEAN SEARCH REPORT
ON EUROPEAN PATENT APPLICATION NO.**

EP 99 10 8872

This annex lists the patent family members relating to the patent documents cited in the above-mentioned European search report.
The members are as contained in the European Patent Office EDP file on
The European Patent Office is in no way liable for these particulars which are merely given for the purpose of information.

20-10-1999

| Patent document cited in search report | Publication date | Patent family member(s) | | Publication date |
|---|---|---|---|---|
| US 5600803 A | 04-02-1997 | JP | 6324977 A | 25-11-1994 |
| | | EP | 0631239 A | 28-12-1994 |
| US 5835785 A | 10-11-1998 | BR | 9505156 A | 21-10-1997 |
| | | CA | 2162015 A | 15-05-1996 |

EPO FORM P0459

For more details about this annex : see Official Journal of the European Patent Office, No. 12/82

8